# EUROPÄISCHE PATENTANMELDUNG

(11) **EP 1 055 584 A2**
(43) Veröffentlichungstag der Anmeldung: **29.11.2000**
(21) Anmeldenummer: 00110216.9
(22) Anmeldetag: 17.05.2000
(51) Int. Cl.: B62D 7/16, F16C 11/00

(54) **Schwenklager**

(30) Priorität: 22.05.1999 DE 19923694
(71) Anmelder: Volkswagen Aktiengesellschaft, 38436 Wolfsburg (DE)
(72) Erfinder: Ott, Klaus, 38176 Wendeburg (DE)

(57) **Zusammenfassung**

Ein erfindungsgemäßes Schwenklager für insbesondere die Vorderachse eines Kraftfahrzeugs umfaßt einen einstückigen Grundkörper (1) aus einem Leichtmetall, der vorzugsweise mittels Thixo-Casting hergestellt ist, wobei Bauteile für die Radaufhängung, die Radführung und die Radbremsung am Gehäuse (1) integriert ausgebildet sind.

## Beschreibung

Die vorliegende Erfindung betrifft ganz allgemein ein Schwenklager, und insbesondere ein Schwenklager für die Vorderachse eines Kraftfahrzeugs nach dem Oberbegriff des Patentanspruchs 1.

Gattungsgemäße Schwenklager, die auch als Radträger bezeichnet werden, stellen die Verbindung zwischen einem Dämpfer oder Dämpferbein, dem Radlager und dem Querlenker an der Vorderachse eines Kraftfahrzeuges her. Die Kopplung des Querlenkers mit dem Schwenklager erfolgt dabei über eine am Schwenklager ausgebildete Führungsgelenkaufnahme.

Bei bekannten Schwenklagern handelt es sich um gegossene oder geschmiedete, einstückige Bauteile, die beispielsweise aus einem Stahlgußwerkstoff oder auch aus Aluminium hergestellt werden. Es handelt sich dabei also um ein massives Bauteil, bei dem alle Funktionsflächen spanend nachgearbeitet werden müssen.

Die vorstehende Beschreibung eines bekannten Schwenklagers macht deutlich, daß es sich bei diesem aufgrund seiner Ausbildung aus einem Vollmaterial um ein schweres Bauteil handelt, welches darüber hinaus nach seiner Formgebung an mehreren Funktionsflächen in einem spanenden Vorgang bearbeitet werden muß.

Darüber hinaus muß an besonders belasteten Stellen eines Schwenklagers aus einem Aluminiumguß eine Stahlbuchse eingesetzt sein, um die erforderlichen Festigkeitswerte erreichen zu können.

Der vorliegenden Erfindung liegt nun zur Beseitigung dieser Nachteile die Aufgabe zugrunde, ein Schwenklager zu schaffen, welches hohe Festigkeitswerte besitzt und trotzdem den Anforderungen des Leichtbaus gerecht wird, d. h. also gewichtssparend ausgebildet ist.

Die Erfindung weist zur Lösung dieser Aufgabe die im Patentanspruch 1 angegebenen Merkmale auf. Vorteilhafte Ausgestaltungen hiervon sind in den weiteren Ansprüchen beschrieben.

Nach der Erfindung ist ein Schwenklager, welches insbesondere für eine Vorderachse eines Kraftfahrzeugs vorgesehen ist, mit einem Grundkörper versehen, der aus Leichtmetall hergestellt ist, wobei an dem Grundkörper Bauteile für die Radaufhängung, die Radführung und die Radbremsung vorgesehen sind, und wobei der Grundkörper und die Bauteile einstückig hergestellt sind.

Die Fertigung des vorliegenden Schwenklagers erfolgt vorzugsweise mittels eines modifizierten Druckgußverfahrens (beispielsweise mittels Thixo-Casting).

Die Herstellung des Grundkörpers des Schwenklagers als einstückiges Bauteil mit integrierten Funktions-Bauteilen für die Radaufhängung, die Radführung und die Radbremsung aus Leichtmetall und bevorzugt mittels Thixo-Casting erlaubt die Ausbildung der Sitze bzw. Anbindungen mit einer Festigkeit, wie sie im Stand der Technik nur durch Einsatz-Stahlbuchsen im Leichtmetall erreicht werden kann. Die hohe zulässige Flächenpressung am erfindungsgemäßen Schwenklager erlaubt das direkte Verschrauben am Grundkörper, ohne eine weitere Nachbearbeitung des Grundkörpers nach dem Thixo-Casting.

Die Erfindung wird im folgendem anhand der Zeichnungen näher erläutert. Diese zeigen in:
Figur 1 eine perspektivische Ansicht eines erfindungsgemäßen Schwenklagers von der Vorderseite gesehen;
Figur 2 eine perspektivische Ansicht eines erfindungsgemäßen Schwenklagers von der Rückseite gesehen;
Figur 3 eine weitere perspektivische Ansicht von der Vorderseite des Schwenklagers gesehen;
Figur 4 eine Rückansicht des Schwenklagers;
Figur 5 eine Vorderansicht des Schwenklagers; und
Figur 6 eine weitere perspektivische Ansicht des Schwenklagers.

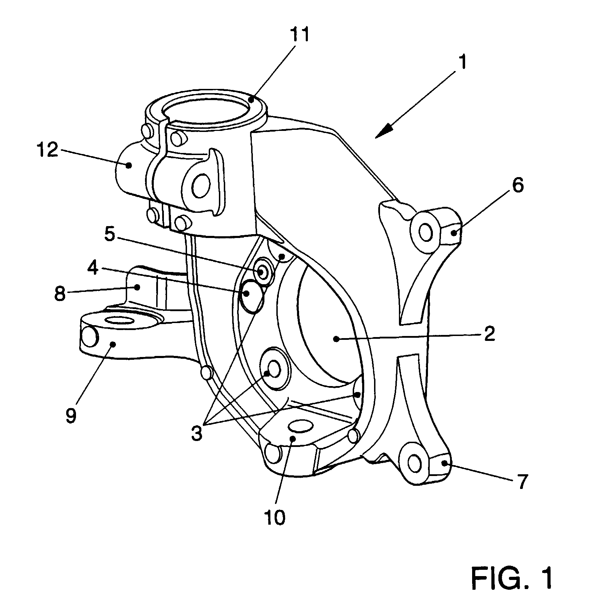

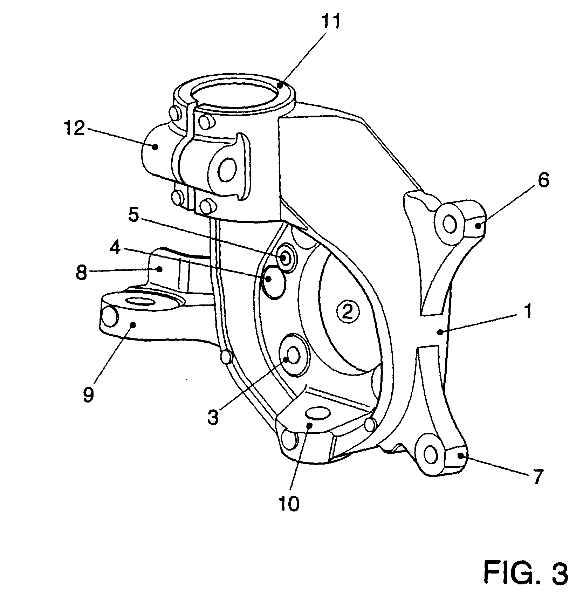

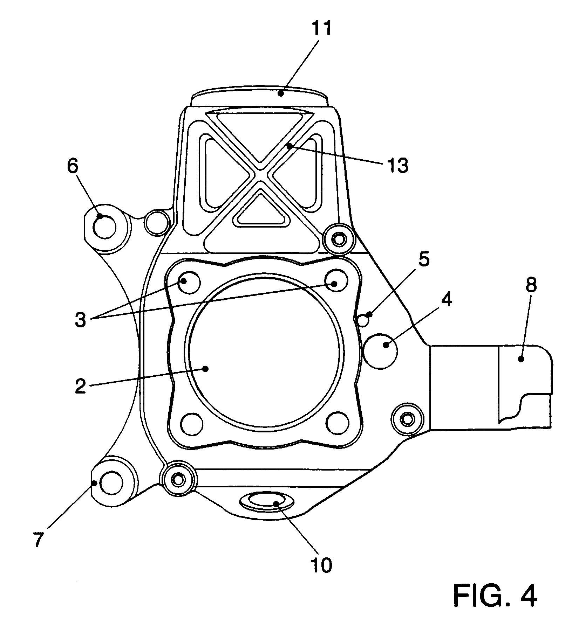

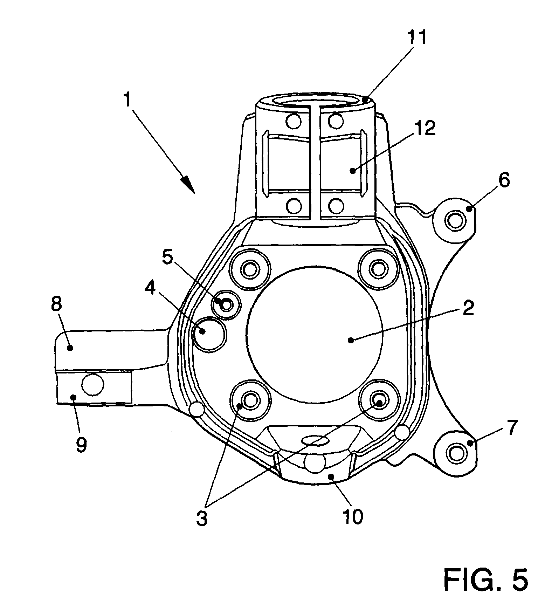

In den Figuren 1 bis 6 ist ein erfindungsgemäßes Schwenklager dargestellt. Ein solches Schwenklager umfaßt einen Grundkörper 1, der aus einem Leichtmetall, vorzugsweise aus einer Aluminiumlegierung, hergestellt ist. Die Fertigung des Grundkörpers 1 wird mittels einem Thixo-Casting-Verfahren durchgeführt.

Der Grundkörper 1 ist im wesentlichen topfförmig ausgebildet, wobei die offene Seite in der Figur 1 dem Betrachter zugewandt ist und wobei die geschlossene Seite mit einer Radlagerdurchführung 2 versehen ist.

Bezogen auf ein Kraftfahrzeug, an dem dieses Schwenklager bevorzugt eingesetzt wird, ist die Rückseite des Grundkörpers 1, d.h. die Seite, auf der sich die Radlagerdurchführung 2 befindet, zum Fahrzeugäußeren ausgerichtet, während die offene Seite des topfförmigen Grundkörpers 1 der Fahrzeuginnenseite zugewandt ist.

Um die Radlagerdurchführung 2 herum, ist eine Mehrzahl von Lagerverschraubungen 3 angeordnet; in der gezeigten Ausführungsform sind es vier Lagerverschraubungen 3, die gleichmäßig am Umfang verteilt angeordnet sind.

In einem Bereich außerhalb der Radlagerdurchführung 2 ist eine Befestigung für einen ABS-Sensor vorgesehen. Diese Befestigung umfaßt eine Durchführung 4 für den ABS-Sensor und eine Befestigung 5 für den ABS-Sensor.

Etwa diametral der Durchführung 4 gegenüberliegend, bezogen auf die Radlagerdurchführung 2, ist eine Befestigung für einen Bremssattel am Grundkörper 1 vorgesehen. Die Bremssattelbefestigung 6/7 ist bei der vorliegenden Ausführungsform in Form zweier vorspringender Nasen ausgebildet, die jeweils eine Öffnung für eine Verschraubung aufweisen.

Auf der Seite der Durchführung 4 für den ABS-Sensor ist eine Anbindung 9 für einen Lenkhebel einer Spurstange (nicht gezeigt) am Grundkörper 1 ausgebildet. Zwischen dieser Anbindung 9 für den Lenkhebel und einer Bremsscheibe (nicht dargestellt), ist ein Wärmeschutzschild 8 ausgebildet. Dieses Wärmeschutzschild 8 schützt die Anbindung 9 bzw. das zugehörige Gelenk vor der Wärme/Hitze, die an der Bremsscheibe bei einem Bremsvorgang erzeugt wird.

Im unteren Bereich des Grundkörpers 1 ist eine Anbindung 10 für ein Führungsgelenk (nicht dargestellt) vorgesehen, sowie im oberen Bereich des Grundkörpers 1 eine Anbindungshülse 11 für ein Behälterrohr eines Stoßdämpfers (nicht dargestellt) ausgebildet ist. Die Anbindungshülse 11 verfügt zudem über eine Klemmeinrichtung 12, mit deren Hilfe das Behälterrohr des Stoßdämpfers in der Anbindungshülse 11 festlegbar ist.

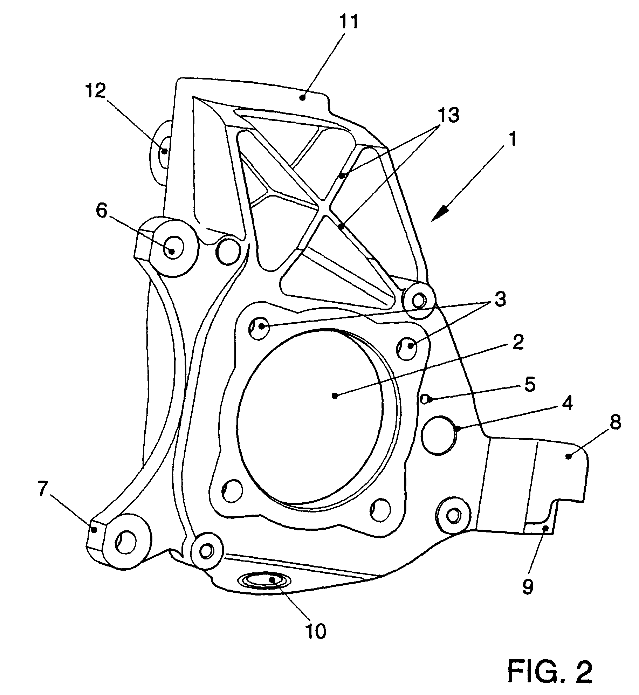

An der Rückseite des Grundkörpers 1 befindet sich ein Abschnitt mit zumindest einer Verstärkungsrippe 13. In der gezeigten Ausführungsform (siehe Figur 2) ist zwischen der Anbindungshülse 11 und der Radlagerdurchführung 2 ein solcher Abschnitt mit mehreren Verstärkungsrippen 13 ausgebildet. Dort verlaufen zwei Verstärkungsrippen 13 kreuzförmig unter einem Winkel zur Senkrechten (siehe Figur 2) sowie zwei weitere Verstärkungsrippen jeweils die beiden Endpunkte dieser kreuzförmigen Verstärkungsrippen 13 miteinander verbinden und in senkrechter Richtung verlaufen.

Diese Verstärkungsrippen 13 versteifen den Grundkörper 1 in dem Bereich zwischen der Anbindungshülse 11 und der Radlagerdurchführung 2.

Alle oben erläuterten Funktions-Bauteile zur Radführung, Radaufhängung und Radbremsung sind einstückig mit dem Grundkörper 1 hergestellt. Da diese Herstellung mittels Thixo-Casting erfolgt, können die Funktionsflächen im einfachsten Fall ohne eine weitere Nachbearbeitung eingesetzt werden. Die Anbindungshülse 11 kann das Stoßdämpferrohr direkt aufnehmen, der ABS-Sensor kann direkt am Grundkörper 1 an der Befestigung 5 befestigt werden, der Bremssattel kann direkt am Grundkörper 1 an den Bremssattelbefestigungen 6 und 7 verschraubt werden, der Lenkhebel kann direkt an der Anbindung 9 am Grundkörper 1 befestigt werden, sowie das Führungsgelenk an der entsprechenden Anbindung 10 direkt am Grundkörper 1 befestigt werden kann.

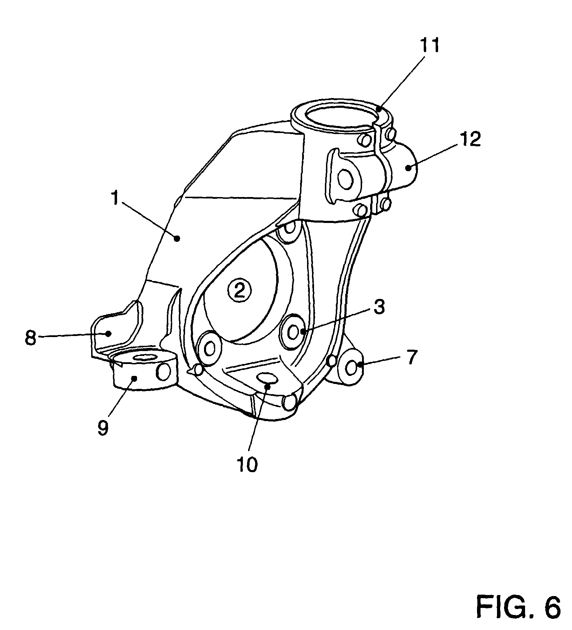

Vorzugsweise ist das Wärmeschutzschild 8 als ein dünner Wandabschnitt ausgebildet, wie in der Figur 6 zu erkennen ist.

Durch das Thixo-Casting-Verfahren lassen sich an den Funktionsflächen hohe zulässige Flächenpressungen realisieren, die im Stand der Technik nur durch Stahl-Einsatzbuchsen zu erreichen waren.

Das erfindungsgemäße Schwenklager stellt demnach einen Grundkörper 1 zur Verfügung, der alle auftretenden Kräfte in diesem Bereich des Fahrwerks eines Kraftfahrzeugs aufnimmt und entsprechend weiterleitet.

Hinsichtlich vorstehend im einzelnen nicht näher erläuterter Merkmale der Erfindung wird im übrigen ausdrücklich auf die Ansprüche und die Zeichnungen verwiesen.

### BEZUGSZEICHENLISTE

- 1: Grundkörper
- 2: Radlagerdurchführung
- 3: Lagerverschraubung
- 4: Durchführung (ABS-Sensor)
- 5: Befestigung (ABS-Sensor)
- 6: Bremssattelbefestigung
- 7: Bremssattelbefestigung
- 8: Wärmeschutzschild
- 9: Anbindung (für Lenkhebel)
- 10: Anbindung (für Führungsgelenk)
- 11: Anbindungshülse (für Behälterrohr)
- 12: Klemmeinrichtung
- 13: Verstärkungsrippe(n)

## Patentansprüche

1. Schwenklager, insbesondere für eine Vorderachse eines Kraftfahrzeugs, mit einem Grundkörper (1), der aus Leichtmetall hergestellt ist, an dem Bauteile (2-12) für die Radaufhängung, Radführung und Radbremsung vorgesehen sind, **dadurch gekennzeichnet, daß** der Grundkörper (1) und die Bauteile (2-12) einstückig hergestellt sind.

2. Schwenklager nach Anspruch 1, dadurch gekennzeichnet, daß der Grundkörper (1) mittels Thixo-Casting hergestellt ist.

3. Schwenklager nach Anspruch 1 oder 2, dadurch gekennzeichnet, daß der Grundkörper (1) im wesentlichen topfförmig ausgebildet ist.

4. Schwenklager nach Anspruch 1, 2 oder 3, dadurch gekennzeichnet, daß das Leichtmetall eine Aluminiumlegierung ist.

5. Schwenklager nach einem der Ansprüche 1 bis 4, dadurch gekennzeichnet, daß eine Anbindung (9) für einen Lenkhebel einer Spurstange am Grundkörper (1) vorgesehen ist, wobei diese Anbindung (9) über ein integriertes Wärmeschutzschild (8) verfügt.

6. Schwenklager nach einem der Ansprüche 1 bis 5, gekennzeichnet durch eine Anbindung (10) für ein Führungsgelenk, die am Grundkörper integriert ist.

7. Schwenklager nach einem der Ansprüche 1 bis 6, gekennzeichnet durch zumindest eine Bremssattelbefestigung (6, 7) zur lösbaren Aufnahme eines Bremssattels, wobei die Bremsattelbefestigung am Grundkörper (1) integriert ist.

8. Schwenklager nach einem der Ansprüche 1 bis 7, gekennzeichnet durch eine Radlagerdurchführung (2), die am Grundkörper (1) integriert ist, wobei vier Lagerverschraubungen (3) am Umfang der Radlagerdurchführung (2) verteilt angeordnet sind.

9. Schwenklager nach einem der Ansprüche 1 bis 8, gekennzeichnet durch eine Anbindungshülse (11) für einen Stoßdämpfer, wobei die Anbindungshülse (11) am Grundkörper (1) integriert ist.

10. Schwenklager nach Anspruch 9, dadurch gekennzeichnet, daß eine Klemmeinrichtung (12) für die Anbindungshülse (11) am Grundkörper (1) integriert ist.

11. Schwenklager nach einem der Ansprüche 1 bis 10, gekennzeichnet durch zumindest eine Verstärkungsrippe (13), die am Grundkörper (1) ausgebildet ist und den Bereich zwischen Anbindungshülse (11) und Radlagerdurchführung (2) verstärkt.

12. Schwenklager nach einem der Ansprüche 1 bis 11, gekennzeichnet durch eine integrierte Durchführung (4) und/oder eine Befestigung (5) für einen ABS-Sensor.
